# EUROPÄISCHE PATENTSCHRIFT

(11) **EP 2 078 883 B1**
(45) Veröffentlichungstag und Bekanntmachung des Hinweises auf die Patenterteilung: **27.03.2013**
(21) Anmeldenummer: 08021052.9
(22) Anmeldetag: 04.12.2008
(51) Int. Cl.: F16H 9/24

(54) **Stufenlos verstellbares Kegelscheibengetriebe mit Zugmittelstrang**
Infinitely adjustable cone pulley drive with traction line
Variateur à poulies coniques pouvant être réglé sans étape doté d'un tronçon de moyen de traction

(30) Priorität: 18.12.2007 DE 102007061028
(43) Veröffentlichungstag der Anmeldung: 15.07.2009
(73) Patentinhaber: PIV Drives GmbH, 61352 Bad Homburg (DE)
(72) Erfinder: Wagner, Peter, Dipl.-Ing., 35444 Biebertal (DE)
(74) Vertreter: Jany und Petersen

(56) Entgegenhaltungen:
- EP-A1- 0 741 255
- EP-A1- 1 656 823
- DE-C- 415 290
- JP-A- 2006 226 450
- US-A- 2 677 283
- US-A1- 2002 077 203
- US-A1- 2004 018 903

## Beschreibung

Die Erfindung betrifft ein stufenlos einstellbares Kegelscheibengetriebe mit auf An- und Abtriebswelle drehfest angeordneten Paaren von Kegelscheiben, von denen je eine fest mit der Welle verbunden sowie je eine axial verschiebbar ist und zwischen denen ein Zugmittelstrang zur Leistungsübertragung umläuft gemäß dem Oberbegriff des beigefügten Hauptanspruchen. Entsprechende Kegelscheibengetriebe sind z.B. bekannt aus den JP-2006 226450 oder der EP 0 741 255.

Üblicherweise wird die Verstellung der Kegelscheiben über hydraulische, axial wirkende Spannmittel bewirkt, denen zur Einstellung und Aufrecherhaltung der Getriebeübersetzung von einer Pumpe Druckmittel über ein Steuerventil zugeteilt wird.

Es gibt aber auch entsprechend stufenlos einstellbare Kegelscheibengetriebe, die mechanisch verstellt werden.

Der Kettenwandler hat dabei einen festgelegten Stellbereich, der insbesondere abhängig ist von der Länge des Zugmittels als auch von der maximalen Öffnung eines Scheibensatzes. Die maximale Öffnung eines Scheibensatzes liegt vor, wenn die axial verschiebbare Kegelscheibe maximal geöffnet ist. Die maximale Öffnung wird dabei über einen Anschlag festgelegt. Aufgrund der geometrischen Beziehungen wird somit der minimale Laufradius des Zugmittels und damit letztlich die Extremübersetzungen des Kettenwandlergetriebes über die maximale Öffnung eines Scheibensatzes mitbestimmt. Die maximale Öffnung des Abtriebsscheibensatzes bestimmt dabei die Overdriveübersetzung, während die maximale Öffnung des Antriebsscheibensatzes die Underdriveübersetzung bestimmt.

Eine mechanische Begrenzung des Stellbereiches eines entsprechenden Kegelscheibengetriebes ist also möglich durch die präzise Positionierung der Anschläge, gegen die die beweglichen Scheiben bei ihrer maximalen Öffnung anschlagen. Da der Winkel der Kegelscheiben etwa 10° beträgt, ändert sich bei einer Verschiebung des Anschlages der entsprechende minimale bzw. maximale Laufkreis mit einem Verhältnis von etwa 1:3. Man erkennt also, dass die Anforderungen an die positionsgenaue Montage des Anschlages sehr hoch sind.

Der Laufkreis wird in gleicher Weise aber auch von der Breite des Zugmittels beeinflusst. Bei einer Kette, wie sie beispielsweise durch die DE-OS 1 294 130 oder die DE-PS 28 48 167 offenbart ist, entspricht diese Breite der Länge von entsprechenden Wiegestücken, über die die Kraftübertragung von dem Zugmittelstrang auf die Kegelscheiben erfolgt.

Die Breite des Zugmittelstranges unterliegt aufgrund von Verschleiß dieser Wiegestücke einer Veränderung, so dass sich der Laufkreis entsprechend den oben beschriebenen geometrisch bedingten Verhältnissen ebenfalls verändern kann.

Die mit dem Verschleiß des Zugmittelstranges einhergehende Änderung des Laufkreises verschiebt dabei den gesamten Stellbereich des Kegelscheibengetriebes in Richtung nach Underdrive. Gleichzeitig wird dabei aber auch die geringstmögliche Underdriveübersetzung kleiner (ü = 1/i = n₁/n₂).

Heute vorhandene elektronische Übersetzungsregelungen sind zwar in der Lage, beim Anfahren eines entsprechenden Kegelscheibengetriebes die Anfahrübersetzung als Sollwert vorzugeben. Ein entsprechendes Einregeln auf diese Anfahrübersetzung ist aber erst möglich, wenn sich das Getriebe dreht und somit aus entsprechenden Drehzahlsignalen von An- und Abtriebswellen der Istwert zur Verfügung steht. In der Praxis führt das dazu, dass die ersten Umdrehungen eines Kegelscheibengetriebes bis zum Eingreifen der elektronischen Übersetzungsregelung zunächst in der mechanischen Endübersetzung erfolgen.

Damit kann es passieren, dass bei Getrieben, die in beabsichtigter Weise eine Stellbereichsbeschränkung haben, das Getriebe in einem ausdrücklich unerwünschten Bereich arbeitet.

In speziellen Anwendungen von Kegelscheibengetrieben, z.B. bei einer Leistungsverzweigung in einer Kombination mit Planetengetrieben, die eine Stellbereichserweiterung ermöglichen, ist die Anforderung an die exakte Positionierung noch wesentlich höher oder es werden Übersetzungen und/oder Fahrgeschwindigkeiten erreicht, die nicht gewünscht oder nicht zulässig sind.

Um dies zu verhindern, werden die Kegelscheibengetriebe immer mit einer erheblichen Verschleißzugabe hergestellt, so dass auch am Ende der Lebensdauer des Zugmittelstrangs der Betriebspunkt der Getriebekombination in einem zulässigen Bereich bleibt.

Abgesehen davon, dass damit der mögliche Betriebsbereich des Kegelscheibengetriebes erheblich beschränkt wird, verbleibt immer noch das Risiko, dass bei unerwartet hohem Verschleiß die Getriebekombination dennoch in einen unerwünschten Betriebsbereich kommt.

Aufgabe der vorliegenden Erfindung ist es daher, ein stufenlos einstellbares Kegelscheibengetriebe wie oben angegeben derart weiterzuentwickeln, dass unabhängig vom Verschleiß des Zugmittelstranges verhindert wird, dass das Getriebe wie beschrieben in einen unzulässigen Betriebspunkt gerät.

Diese Aufgabe wird erfindungsgemäß gelöst mit einem Kegelscheibengetriebe, das die Merkmale des beigefügten Hauptanspruchen aufweist.

Der Lösung dieser Aufgabe liegt die Erkenntnis zugrunde, dass eine wirkungsvolle Begrenzung des Stellbereichs unabhängig insbesondere auch vom Breitenverschleiß des Zugmittelstranges nur möglich ist, wenn statt dessen eine direkte Bestimmungsgröße der Übersetzung begrenzt wird, im vorliegenden Fall also die Laufradien des Zugmittelstranges. In diesem Fall hat der Breitenverschleiß des Zugmittelstranges nämlich keinen Einfluss mehr auf die Endübersetzung und das oben angesprochene Problem der sich über die Lebensdauer des Zugmittelstranges jeweils verschleißbedingt verändernden Anfahrübersetzung ist ebenfalls gelöst.

Es ist dabei ausreichend, lediglich einen der beiden Laufradien für den Zugmittelstrang festzulegen, da sich der andere über die Länge des Zugmittelstranges einstellt. Hierbei ist weiter zu berücksichtigen, dass die Veränderung der Länge des Zugmittelstranges, insbesondere wenn es sich bei diesem um eine Kette wie oben beschrieben handelt, in einer vernachlässigbaren Größenordnung liegt.

Die radiale Begrenzung des Kettenlaufradius kann grundsätzlich am An- und Abtriebsscheibensatz erfolgen.

Bei einer bevorzugten Ausführungsform wird vorgeschlagen, den Anschlag auf der Antriebsseite vorzusehen.

Grundsätzlich kann der Anschlag als Stufe an wenigstens einer der Kegelscheiben ausgebildet sein. Gegen diese Stufe kann dann der Zugmittelstrang in Anlage kommen. Vorzugsweise wird der Anschlag durch die Umfangsfläche der Antriebswelle gebildet. Hierdurch ist eine betriebssichere Lösung zu finden, ohne dass an den Kegelscheiben mit erhöhtem Aufwand anzubringende Stufen vorgesehen werden müssen.

Es ist dabei auch im Rahmen der Erfindung, wenn die Umfangsfläche der Antriebswelle beispielsweise durch eine Hülse o.ä. an die entsprechenden Bedürfnisse in geometrischer Weise angepasst werden kann.

Wie bereits diskutiert ist ein vorzugsweise verwandter Zugmittelstrang für das hier beschriebene Kegelscheibengetriebe eine Kette mit einer Mehrzahl von Laschen, die über Wiegedruckstücke miteinander verbunden sind.

Es war in diesem Zusammenhang bisher üblich, ein mechanisches Auflaufen der Kette auf die Antriebswelle zu vermeiden, um hier unerwünschten Verschleiß, Geräusche etc. zu verhindern. Damit dies bei einem Kegelscheibengetriebe wie oben beschrieben mit einer Kette als Zugmittelstrang nicht zu Problemen führt, wird weiter vorgeschlagen, die Laschen einer solchen Kette an ihrer den Wellen zugewandten Seite mit einer an die Geometrie der Antriebswelle angepassten Kontur zu versehen.

Hierbei können entweder gekrümmte Abschnitte vorgesehen sein, deren Krümmungsradius dem Radius der Antriebswelle entsprechen.

Es ist aber auch möglich, die der Welle zugewandte Kontur der Laschen mit mehreren auf einem dem Radius der Antriebswelle entsprechenden Kreisbogen liegenden Auflagepunkten zu versehen. Insbesondere werden zwei Auflagepunkte vorgesehen. Aber auch mehrere Auflagepunkte sind im Rahmen der vorliegenden Erfindung möglich. Diese Auflagepunkte sind insbesondere durch eine lokale Härtung, Vergütung o.ä. in besonderer Weise gegen Verschleiß geschützt.

Es soll dabei erwähnt werden, dass es bei Ketten, die mit mehreren parallelen Laschen gefertigt werden, auch ausreichend ist, wenn lediglich einige dieser mehreren Laschen die an die Geometrie der Antriebswelle angepasste Kontur haben, soweit diese Kontur über die parallel liegenden benachbarten Laschen, die nicht mit einer solchen Kontur versehen sind, herausragt.

Weitere Vorteile und Merkmale der Erfindung ergeben sich aus der nachfolgenden Beschreibung eines Ausführungsbeispiels. Dabei zeigt:
- Figur 1: die Prinzipskizze eines stufenlos einstellbaren Kegelscheibengetriebes;
- Figuren 2-4: einen Kegelscheibensatz in seiner maximalen Öffnung in unterschiedlichen Phasen der Lebensdauer des Zugmittelstranges;
- Figur 5: einen Schnitt durch eine Welle eines Kegelscheibengetriebes mit auf der Welle aufliegendem Zugmittelstrang.

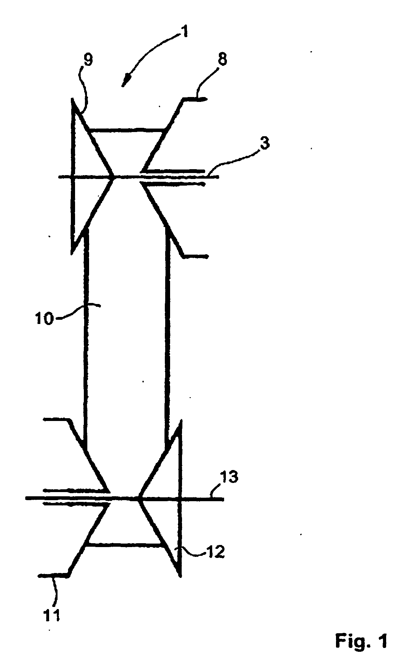

In Figur 1 erkennt man die Prinzipskizze eines stufenlos einstellbaren Kegelscheibengetriebes 1.

Das Kegelscheibengetriebe 1 weist eine Antriebswelle 3 auf, die mit einem (nicht dargestellten) Antriebsmotor verbunden ist.

Bei speziellen Anwendungen sollen kritische Getriebeübersetzungen vermieden werden.

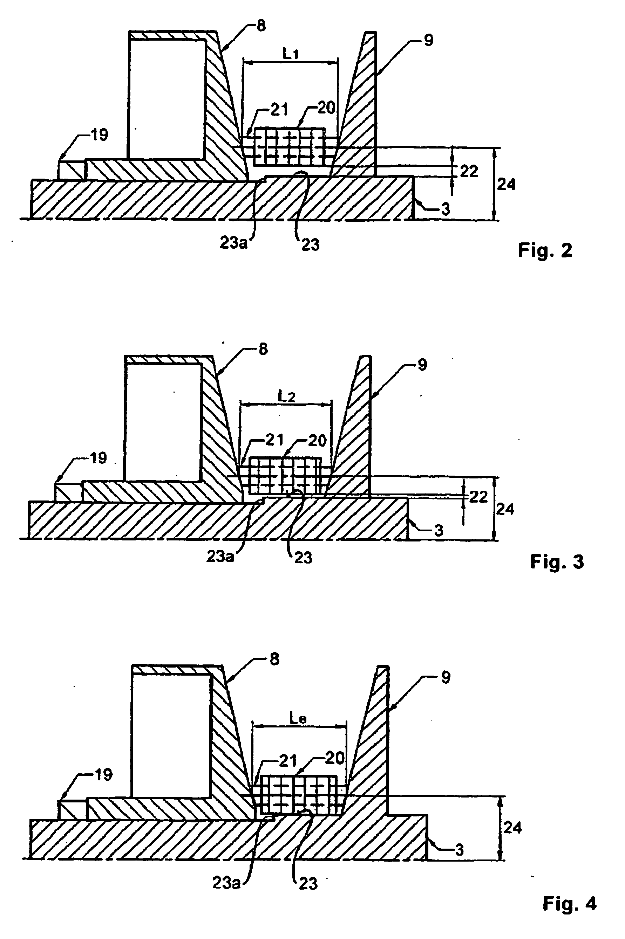

Für derartige kritische Übersetzungen ist je nach Anwendung insbesondere auch der minimale Laufradius des Zugmittels 10 auf den Kegelscheibenpaaren 8, 9 bzw. 11, 12 von Bedeutung, wie dies anhand der Figuren 2 - 4 im Folgenden erläutert wird:

Man erkennt hier jeweils die Antriebswelle 3, die fest mit einer Kegelscheibe 9 verbunden ist, während die andere zum Kegelscheibenpaar gehörende Kegelscheibe 8 über eine nicht dargestellte Hydraulik axial verstellbar ist.

In den Figuren 2 - 4 ist dabei die axial verstellbare Kegelscheibe 8 jeweils in ihrer maximalen Öffnungsposition dargestellt, in der sie an einen Anschlag 19 zur Anlage kommt, der mit seiner Position damit die maximale Öffnung des Kegelscheibenpaares 8, 9 bestimmt. Dies entspricht im Wesentlichen der herkömmlichen Methode, die Übersetzung durch axiale Anschläge der Kegelscheiben zu begrenzen.

Zwischen den Kegelscheiben 8, 9 ist ein Zugmittelstrang in Form einer Kette geführt. Diese Kette besteht aus Laschen 20, die an ihren Enden über Wiegedruckstücke 21 verbunden sind. Die Leistungsübertragung vom Zugmittelstrang auf die Kegelscheiben 8, 9 erfolgt dabei über die Anpresskräfte zwischen den Stirnseiten der Wiegedrückstücke 21 und den Kegelflächen der Kegelscheiben 8, 9.

Im Lauf ihrer Lebensdauer verschleißen die Wiegedruckstücke 21, so dass ihre effektive Länge von einer Ursprungslänge L₁ über eine Länge L₂ bis zu einer Endlänge L_{E} abnimmt. Diese Längen sind in den Figuren 2, 3 bzw. 4 dargestellt.

Man erkennt dabei, dass der Abstand 22 der Wiegedrückstücke 21 von der Umfangsfläche 23 der Antriebswelle 3 mit zunehmendem Verschleiß kontinuierlich abnimmt, bis er - wie in der Figur 4 dargestellt - Null wird und die Laschen 20 des Zugmittels direkt auf der Umfangsfläche 23 der Antriebswelle 3 aufliegen. Mit dem Abstand 22 verringert sich in gleichem Maß der minimale Laufradius 24 des Zugmittelstranges im Kegelscheibenpaar 8, 9.

Bei dem hier beschriebenen Kegelscheibengetriebe ist jetzt sichergestellt, dass auch bei einem minimalst möglichen Laufradius 24, wie er in der Figur 4 dargestellt ist, bei dem die Laschen 20 auf der Umfangsfläche 23 der Antriebswelle 3 aufliegen, die sich ergebende Übersetzung noch zulässig ist.

Dies wird erreicht, indem in die Umfangsfläche der Antriebswelle eine Stufe 23a eingearbeitet ist, deren bezogen auf die Antriebswelle 3 radiale Erstreckung bedarfsweise gewählt wird.

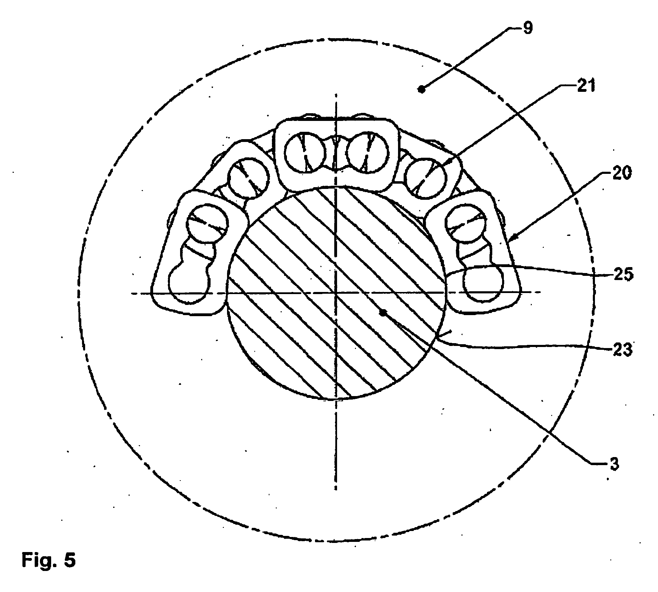

Damit bei der in Figur 4 dargestellten Situation zwischen den Laschen 20 und der Umfangsfläche 23 der Antriebswelle 3 keine unerwünscht hohen Pressungen auftreten, ist die der Antriebswelle 3 zugewandte Seite der Laschen 20 in ihrer Kontur 25 an den Radius der Antriebswelle 3 angepasst, so dass eventuell auftretende Anpressungen über eine größere Anschmiegefläche der Kontur 25 an die Umfangsfläche 23 der Antriebswelle 3 abgebaut werden können. Dies ist in der Figur 5 dargestellt.

Außerdem sind die Laschen 20 im Bereich der Kontur 25 gehärtet bzw. vergütet, um den eventuell höheren Pressungen widerstehen zu können und nicht in ungewünschter Weise zu verschleißen.

Auf diese Weise kann auch die gesamte Lauffläche der Kegelscheiben 8, 9 für die Übersetzungsverstellung benutzt werden und es ist nicht notwendig, insbesondere im radial innenliegenden Bereich für eventuell auftretenden Verschleiß dann im Wesentlichen ungenutzte mögliche Verstellbereiche vorzusehen, um Sicherheiten einplanen zu können. Es besteht also die Möglichkeit, die dargestellte Position von Anfang an zu benutzen. Dadurch ist der Nenn-Stellbereich um den Abstand 22 größer als bisher im Stand der Technik üblich. Außerdem kann man die Scheiben ggf. in ihrem Durchmesser verkleinern, was zu Gewichtsersparnissen des Getriebes führt und damit wegen verringerter träger Massen auch zu einer verbesserten Reaktionsgeschwindigkeit und einem besseren Wirkungsgrad.

## Patentansprüche

1. Stufenlos einstellbares Kegelscheibengetriebe (1) mit auf An- und Abtriebswelle (3, 13) drehfest angeordneten Paaren von Kegelscheiben (8, 9; 11, 12), von denen je eine (9; 11) fest mit der Welle (3, 13) sowie je eine (12; 8) axial verschiebbar ist und zwischen denen ein Zugmittelstrang (10) zur Leistungsübertragung umläuft, wobei das Kegelscheibengetriebe eine Stellbereichsbeschränkung aufweist,
**dadurch gekennzeichnet,**
**dass** bei wenigstens einem Kegelscheibenpaar (8, 9) ein im wesentlichen in Radialrichtung auf den Zugmittelstrang (10) wirkender Anschlag (23) zur Übersetzungsbegrenzung des Kegelscheibengetriebes vorgesehen ist, der auf eine direkte Bestimmungsgröße der Übersetzung mämlich auf den Laufradius Zugmittelstranges wirkt.

2. Kegelscheibengetriebe gemäß Anspruch 1,
**dadurch gekennzeichnet,**
**dass** der Anschlag als Stufe (23a) an wenigstens einer der Kegelscheiben ausgebildet ist.

3. Kegelscheibengetriebe gemäß Anspruch 1,
**dadurch gekennzeichnet,**
**dass** der Anschlag durch die Umfangsfläche (23) der Antriebswelle (3) gebildet ist.

4. Kegelscheibengetriebe (1) gemäß Anspruch 3
**dadurch gekennzeichnet,**
**dass** der Zugrpittelstrang (10) eine Mehrzahl von Laschen (20) aufweist, die über Wiegedruckstücke (21) miteinander verbunden sind, wobei die Laschen (20) an ihrer den Wellen (3) zugewandten Seite eine an die Wellengeometrie angepasste Kontur (25) aufweisen.

5. Kegelscheibengetriebe gemäß Anspruch 4,
**dadurch gekennzeichnet,**
**dass** die Kontur (25) dem Radius der Antriebswelle (3) entsprechend gekrümmte Abschnitte aufweist.

6. Kegelscheibengetriebe gemäß Anspruch 4,
**dadurch gekennzeichnet,**
**dass** die Kontur mehrere auf einem dem Radius der Abtriebswelle (3) entsprechenden Kreisbogen liegende Auflagepunkte aufweist.

7. Kegelscheibengetriebe gemäß einem der Ansprüche 5 oder 6,
**dadurch gekennzeichnet,**
**dass** die Laschen im Bereich der angepassten Kontur gehärtet oder vergütet sind.

## Claims

1. Continuously variable conical pulley transmission (1) comprising pairs of conical pulleys (8, 9; 11, 12) which are non-rotably disposed on the drive and output shafts (3, 13), and of which a respective one (9; 11) is fixed to the shaft (3, 13) and a respective one (12; 8) is axially movable, and between which a traction mechanism (10) turns for power transmission, wherein the conical pulley transmission has an adjustment range limiting means, **characterised in that** in at least one pair of cone pulleys (8, 9) a stop (23) is provided which acts substantially in the radial direction on the traction mechanism (10) to limit the gear ratio of the conical pulley transmission and which acts on a direct parameter of the gear ratio, namely on the running radius of the traction mechanism.

2. Conical pulley transmission as claimed in Claim 1, **characterised in that** the stop is constructed as a step (23a) on at least one of the conical pulleys.

3. Conical pulley transmission as claimed in Claim 1, **characterised in that** the stop is formed by the circumferential surface (23) of the drive shaft (3).

4. Conical pulley transmission (1) as claimed in Claim 3, **characterised in that** the traction mechanism (10) has a plurality of links (20) which are connected to one another by means of rocker pressure pieces (21), wherein the links (20) have on their side facing the shafts a contour (25) adapted to the shaft geometry.

5. Conical pulley transmission as claimed in Claim 4, **characterised in that** the contour (25) has curved sections corresponding to the radius of the drive shaft (3).

6. Conical pulley transmission as claimed in Claim 4, **characterised in that** the contour has a plurality of contact points which lie on a circular arc which corresponds to the radius of the output shaft (3).

7. Conical pulley transmission as claimed in any one of Claims 5 or 6, **characterised in that** the links are hardened or tempered in the region of the adapted contour.

## Revendications

1. Transmission (1) par poulies coniques, réglable en continu, comportant des paires de poulies coniques (8, 9 ; 11, 12) calées avec verrouillage rotatif sur des arbres d'entrée et de sortie (3, 13), une poulie respective (9 ; 11) étant assujettie à l'arbre (3, 13) et une poulie respective (12 ; 8) étant mobile axialement, poulies entre lesquelles un segment (10) de moyen de traction accomplit une révolution en vue de transmettre une puissance, ladite transmission par poulies coniques présentant une limitation de plage de réglages,
**caractérisée par le fait**
**que**, dans au moins une paire de poulies coniques (8, 9), une butée (23), agissant pour l'essentiel dans le sens radial sur le segment (10) de moyen de traction, est prévue pour limiter la démultiplication de ladite transmission par poulies coniques et agit sur une grandeur de détermination directe de la démultiplication, à savoir sur le rayon de roulement dudit segment de moyen de traction.

2. Transmission par poulies coniques, selon la revendication 1,
**caractérisée par le fait**
**que** la butée est réalisée sous la forme d'un gradin (23a) sur au moins l'une des poulies coniques.

3. Transmission par poulies coniques, selon la revendication 1,
**caractérisée par le fait**
**que** la butée est formée par la surface (23) du pourtour de l'arbre d'entrée (3).

4. Transmission (1) par poulies coniques, selon la revendication 3,
**caractérisée par le fait**
**que** le segment (10) de moyen de traction présente une pluralité de plaquettes (20) qui sont reliées les unes aux autres par des pièces de pression (21) basculantes, lesdites plaquettes (20) étant dotées, sur leur côté pointant vers l'arbre (3), d'un profil (25) adapté à la géométrie dudit arbre.

5. Transmission par poulies coniques, selon la revendication 4,
**caractérisée par le fait**
**que** le profil (25) comporte des tronçons munis d'une courbure correspondant au rayon de l'arbre d'entrée (3).

6. Transmission par poulies coniques, selon la revendication 4,
**caractérisée par le fait**
**que** le profil comprend plusieurs points d'appui, situés sur un arc de cercle correspondant au rayon de l'arbre d'entrée (3).

7. Transmission par poulies coniques, selon l'une des revendications 5 ou 6,
**caractérisée par le fait**
**que** les plaquettes sont durcies ou trempées dans la région du profil adapté.
